# EUROPÄISCHE PATENTSCHRIFT

(11) **EP 2 276 641 B1**
(45) Veröffentlichungstag und Bekanntmachung des Hinweises auf die Patenterteilung: **20.06.2012**
(21) Anmeldenummer: 09730662.5
(22) Anmeldetag: 06.02.2009
(51) Int. Cl.: B60G 15/06, B60G 17/02, F16F 9/42

(54) **FEDERBEIN FÜR RADAUFHÄNGUNGEN VON KRAFTFAHRZEUGEN**
SUSPENSION STRUT FOR WHEEL SUSPENSIONS OF MOTOR VEHICLES
JAMBE DE SUSPENSION POUR LES SUSPENSIONS DE ROUES DE VEHICULES AUTOMOBILES

(30) Priorität: 11.04.2008 DE 102008018336
(43) Veröffentlichungstag der Anmeldung: 26.01.2011
(73) Patentinhaber: Audi AG, 85045 Ingolstadt (DE)
(72) Erfinder: MICHEL, Wilfried, 93339 Riedenburg (DE); OHLETZ, Armin, 85092 Kösching (DE)
(74) Vertreter: Asch, Konrad
(86) Internationale Anmeldenummer: PCT/EP2009/000812
(87) Internationale Veröffentlichungsnummer: WO 2009/124617

(56) Entgegenhaltungen:
- EP-A- 1 681 186
- DE-A1- 10 122 542
- DE-A1- 10 200 608
- DE-A1-102005 028 754
- DE-A1-102005 053 493
- FR-A- 2 626 332
- JP-A- 2000 356 236
- KR-A- 20080 013 356

## Beschreibung

Die Erfindung betrifft ein Federbein für Radaufhängungen von Kraftfahrzeugen gemäß dem Oberbegriff des Patentanspruches 1.

Ein derartiges Federbein für eine aktive Radaufhängung für Kraftfahrzeuge beschreibt beispielsweise die DE 10 2005 053 493 A1, bei der zur Wank- und Nickstabilisierung und/oder zur Höhenverstellung der Karosserie des Kraftfahrzeuges innerhalb der Tragfeder und/oder Speicherfeder und um den Stoßdämpfer herum ein elektromotorisch betriebener Stelltrieb vorgesehen ist, der auf einen axial verschiebbaren Verstellfederteller wirkt.

Die EP-A-1 681 186, als nächstliegender Stand der Technik angesehen, zeigt ein Federbein nach dem Oberbegriff des Anspruchs 1.

Da der empfindliche Stelltrieb, etwa ein Kugelgewindetrieb, vor Umwelteinflüssen geschützt werden muss, ist es unerlässlich, das gesamte Federbein zu kapseln. Dies erfolgt je nach Ausführung des aktiven Federbeines mit einem oder zwei Faltenbälgen. Die unmittelbare Folge davon ist eine mangelhafte Wärmeabfuhr. D. h., der Dämpfer wird unzureichend gekühlt. Einerseits verhindern die Faltenbälge eine unmittelbare Dämpferkühlung üblich durch den Fahrtwind. Andererseits steigt durch die aus der Dämpfungsarbeit umgewandelte Abwärme die Temperatur innerhalb der Faltenbälge auf unzulässig hohe Werte. Zusätzlich erzeugt der Antriebsmotor Abwärme, die ebenfalls abzuführen ist. Ohne gezielte Kühlung versagt der Antriebsmotor und der Dämpfer sehr frühzeitig.

Aufgabe der Erfindung ist es, ein Federbein der gattungsgemäßen Art vorzuschlagen, bei dem mit baulich einfachen Mitteln eine zuverlässige, robuste Innenkühlung erzielt ist.

Diese Aufgabe wird erfindungsgemäß mit den kennzeichnenden Merkmalen des Patentanspruches 1 gelöst. Die weiteren Patentansprüche beschreiben vorteilhafte Weiterbildungen der Erfindung.

Erfindungsgemäß wird vorgeschlagen, dass der von dem Faltenbalg umschlossene Raum mit vorzugsweise querschnittsgesteuerten Zuführöffnungen und Abführöffnungen für Kühlluft verbunden ist, derart, dass der zumindest eine entsprechend ausgesteift ausgebildete Faltenbalg bei Federbewegungen der Radaufhängung als Luftpumpe wirkt. Damit wird durch die Komprimierung und Entspannung des Faltenbalges eine Luftströmung in dem umschlossenen Raum erzeugt, die die relevanten Bereiche des Stoßdämpfers und des Stelltriebes wirksam kühlt. Es versteht sich, dass der Faltenbalg konstruktiv über seinen Umfang so steif ausgelegt sein muss, dass er der Funktion als Luftpumpe gerecht werden kann. Dies kann beispielsweise durch entsprechende Wandstärken, Gewebeverstärkungen oder Bewehrungen wie Metallringe, etc. des zumindest in Axialrichtung gummielastischen Faltenbalges gewährleistet sein.

Durch die erfindungsgemäße gesteuerte Luftbewegung wird relativ kühle, saubere Luft angesaugt und erwärmte, verbrauchte Luft aus dem Innenraum des Federbeins ausgeschoben. Auf diese Weise wird für den gewünschten Wärmeaustausch, d. h. die erforderliche Wärmeabfuhr, gesorgt.

In bevorzugter Weiterbildung der Erfindung können zwei Faltenbälge vorgesehen sein, die jeweils einerseits an dem Verstellfederteller mittelbar oder unmittelbar befestigt sind, wobei in dem Verstellfederteller zumindest eine die beiden umschlossenen Räume verbindende Ausnehmung vorgesehen ist und wobei zumindest ein Raum mit zumindest einer Zuführöffnung und einer Abführöffnung für Kühlluft versehen ist. Damit kann gegebenenfalls die Kühlluftströmung auf besonders temperaturbeaufschlagte Bereiche konzentriert werden. Es können aber auch beide von den Faltenbälgen umschlossene Räume hintereinandergeschaltet sein, mit nur einer Zuführöffnung und einer Abführöffnung für die Kühlluft.

Wenn die zumindest eine Zuführöffnung geodätisch oben liegend und die zumindest eine Abführöffnung für Kühlluft geodätisch unten liegend angeordnet ist, ist in einfacher Weise sichergestellt, dass gegebenenfalls vorhandene Feuchtigkeit über die Abführöffnung abgeleitet werden kann.

Zur Erzielung einer gleichmäßigen Kühlung im Federbein wird ferner vorgeschlagen, dass die oben liegende Zuführöffnung durch eine zentrale Bohrung und einen diese schneidenden Querkanal im Anschlusszapfen des Stoßdämpfers am aufbauseitigen Dämpferlager gebildet ist, also zentral in das Federbein mündet.

Des Weiteren kann an die Bohrung bzw. Zuführöffnung eine Ansaugleitung mit einem Rückschlagventil angeschlossen sein, wobei die Ansaugleitung in einen Reinluftraum von Einrichtungen des Kraftfahrzeuges mündet. Insbesondere kann die Ansaugleitung in einen Wasserkasten unterhalb eines Luftfilters einer den Fahrzeuginnenraum des Kraftfahrzeuges mit konditionierter Raumluft versorgenden Einrichtung sein, z. B. einer Heizvorrichtung, einer Kühlluftzuführung oder einer Klimaanlage.

Die unten positionierte Abführöffnung für Kühlluft kann durch ein weiteres Rückschlagventil gebildet sein, das mittelbar oder unmittelbar im die Tragfeder abstützenden, unteren Federteller vorgesehen ist, oder sie kann baulich besonders einfach durch zumindest eine Drosselbohrung hergestellt sein.

Mit den vorzugsweise stromab und/oder stromauf des vom Faltenbalg umschlossenen Raumes angeordneten Rückschlagventilen kann die Kühlluftströmung in die gewollte Richtung gelenkt werden, mit dem zumindest einem Rückschlagventil an der Einlass- oder Auslassseite wirkt das Federbein bei einer Eigenbewegung wie eine selbsttätig arbeitende Luftpumpe. Bei einem aktiven Federbein bewegt sich der Verstellfederteller je nach Erfordernis sowie je nach Fahrbahnbeschaffenheit in unterschiedlichen Amplituden. Auf Grund dieser Tatsache ergibt sich ein ständiges Wechselspiel sich verändernder Luftvolumina in dem zu kühlenden Raum und damit die automatisch arbeitende Luftpumpe.

Bevorzugt herrscht beim Ansaugvorgang nur ein minimaler Unterdruck in dem zu kühlenden Raum, wodurch ein Kollabieren des oder der Faltenbälge vermieden wird. Dies wird durch entsprechend großzügig bemessene Leitungsquerschnitte im Ansaugtrakt erreicht. Demgegenüber ist beim Ausschieben ein größerer Überdruck durchaus erwünscht, damit Fremdkörper, Kondenswasser, Abrieb oder dergleichen, aus der Auslassseite ins Freie befördert werden können. Ein hier anzuwendender Überdruck ist für die Faltenbälge unschädlich. Durch eine an der Auslassseite vorgesehene Drosselbohrung würde auf Grund des geringen Querschnittes wiederum kein Fremdkörper von außen angesaugt werden können.

Die Drosselbohrung kann dabei über eine labyrinthartige Strömungsverbindung, etwa ein sogenanntes "Schneckenlabyrinth", im Federteller mit dem korrespondierenden Raum innerhalb des Faltenbalges verbunden sein, wodurch einem unbeabsichtigten Eindringen von Feuchtigkeit, Schmutz, etc. zuverlässig entgegengewirkt wird.

Die labyrinthartige Strömungsverbindung bzw. das Schneckenlabyrinth kann am Boden einer Dämpferstelze durch entsprechende Formgebung des Bodens selbst, in Verbindung mit einem zusätzlichen Abdeckblech, gebildet werden. Alternativ zum Schneckenlabyrinth sind auch andere Labyrinth-Formen denkbar. Der Boden kann beispielhaft mit einer archimedischen Spirale ausgestattet sein.

Die Strömungsverbindung kann fertigungstechnisch günstig durch eine schneckenförmig verlaufende Nut im unteren Federteller hergestellt sein, die durch ein darüber liegendes Abdeckblech geschlossen ist und die eine Einströmöffnung einerseits und eine mit der Drosselbohrung verbundene Ausströmöffnung andererseits aufweist.

In vorteilhafter Weiterbildung der Erfindung kann der den Verstellfederteller verstellende Stelltrieb eine um das Dämpferrohr des Stoßdämpfers angeordnete, drehbar gelagerte Gewindespindel aufweisen, auf der die den Verstellfederteller tragende Gewindemutter geführt ist, wobei zwischen der Gewindespindel und dem Dämpferrohr ein Ringspalt gebildet ist, der mit der oberen Zuführöffnung und der unteren Abführöffnung strömungstechnisch verbunden ist und als ringförmiger Kühlkanal wirkt. Die Kühlluftströmung verläuft somit besonders wirksam unmittelbar außerhalb des Stoßdämpfers und innerhalb der hülsenförmigen Gewindespindel mit direkter Beaufschlagung der temperaturbelasteten Bauteiloberflächen.

Besonders zweckmäßig kann dabei das Dämpferrohr des Stoßdämpfers über den Anschlusszapfen mit dem aufbauseitigen Dämpferlager verbunden sein, wobei die zentrale Bohrung mit dem anschließenden Querkanal unmittelbar in den Ringspalt bzw. den ringförmigen Kühlkanal mündet.

Baulich und fertigungstechnisch vorteilhaft können ferner im Bereich der unteren Wälzlagerung der Gewindespindel auf dem Dämpferrohr des Stoßdämpfers Durchbrüche in Form von Axialnuten vorgesehen sein, die den ringförmigen Kühlkanal mit dem durch den Faltenbalg umschlossenen Raum im Bereich der Kolbenstange des Stoßdämpfers verbinden. Die besagten Durchbrüche können in das Dämpferrohr eingeprägt oder bevorzugt in einen Zwischenring oder unmittelbar in den inneren Lagerring des Wälzlagers eingearbeitet sein.

In vorteilhafter Weise kann des weiteren der die Gewindespindel des Stelltriebes antreibende Elektromotor ringförmig innerhalb der Speicherfeder angeordnet sein, wobei dessen ringförmiger Rotor trieblich mit der Gewindespindel verbunden ist, und wobei der Elektromotor oberhalb der in dem Verstellfederteller angeordneten Ausnehmungen positioniert ist. Damit gelingt es, über die durch die Ausnehmungen bei Federbewegungen strömende Kühlluft auch den Elektromotor mitzukühlen bzw. erwärmte Luft abzuführen.

Zusätzlich oder alternativ kann eine weitere Kühlung des Elektromotors erreicht werden, wenn der zwischen dem Rotor und dem Stator des Elektromotors gebildete Ringspalt strömungstechnisch mit der oberen Zuführöffnung und dem oberhalb des Verstellfedertellers gebildeten Raum in Verbindung steht.

Dazu kann in baulich besonders einfacher Weise der Ringspalt zwischen dem Rotor und dem Stator des Elektromotors über einen weiteren, die zentrale Bohrung in dem Anschlusszapfen des Dämpferrohres des Stoßdämpfers schneidenden Querkanal mit der Zuführöffnung für Kühlluft verbunden sein.

Ein Ausführungsbeispiel der Erfindung ist im Folgenden mit weiteren Einzelheiten näher erläutert. Die schematische Zeichnung zeigt in:
- Fig. 1: einen Längsschnitt durch ein aktives Federbein für eine Radaufhängung von Kraftfahrzeugen, mit einem Teleskop-Stoßdämpfer, einer Tragfeder, einer Speicherfeder, einem elektromotorisch betriebenen Stelltrieb zur Höhenverstellung der Karosserie des Kraftfahrzeuges, sowie mit die Federn und den Stelltrieb umschließenden Faltenbälgen mit einer querschnittsgesteuerten Zuführöffnung und einer Abführöffnung zur Kühlluftförderung;
- Fig. 2: den oberen Abschnitt des Federbeines nach Fig. 1, mit innerhalb der Speicherfeder integriertem Elektromotor und Stelltrieb, die um das Dämpferrohr des Stoßdämpfers angeordnet sind;
- Fig. 3: den unteren Abschnitt des Federbeines nach Fig. 1, mit der unteren Wälzlagerung der Gewindespindel des Stelltriebes und dem unteren Federteller der Tragfeder mit labyrinthartiger Strömungsverbindung und Drosselbohrung als untere Abströmöffnung für Kühlluft;
- Fig. 4: den mittleren Abschnitt des Federbeines nach Fig. 1, mit dem zwischen der Tragfeder und der Speicherfeder angeordnetem Verstellfederteller, an dem die beiden Faltenbälge angeschlossen sind; und
- Fig. 5: in einer Abwandlung zur Fig. 2 eine alternative Luftzuführung entlang von am Umfang des Anschlusszapfens angeordneten Nuten.

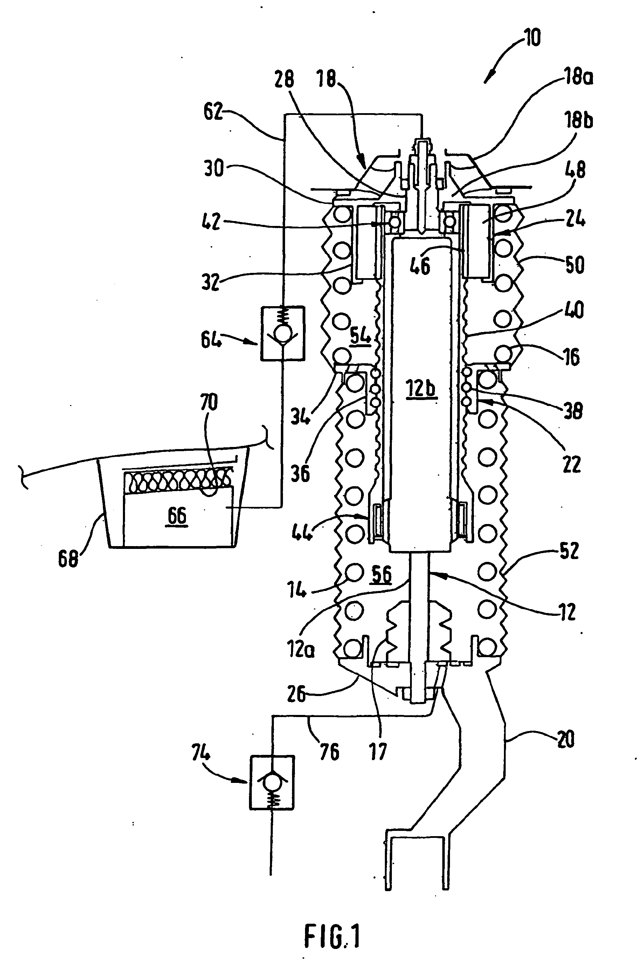

In der **Fig. 1** ist schematisch ein aktives Federbein 10 für eine Radaufhängung von Kraftfahrzeugen dargestellt, das sich im Wesentlichen aus einem Teleskop-Stoßdämpfer 12, einer Tragfeder 14, einer Speicherfeder 16, einem oberen Dämpferlager 18 und einer unteren Dämpferstelze 20 zusammensetzt.

Eine Höhenverstellung der Karosserie des Kraftfahrzeuges und/oder eine Wank- und Nickstabilisierung wird gesteuert mittels eines Stelltriebes 22, der über einen Elektromotor 24 angetrieben ist.

Der Stoßdämpfer 12 ist mit seiner nach unten ragenden Kolbenstange 12a an einem unteren Federteller 26 befestigt. Der Federteller 26 bildet eine Baueinheit mit der Dämpferstelze 20, die in bekannter Weise an einem Radführungselement der Radaufhängung des Kraftfahrzeuges, z. B. einem Lenker oder einem Radträger, angelenkt oder befestigt ist. An dem Federteller 26 ist ferner ein gummielastischer Anschlagpuffer 17 als Zusatzfeder vorgesehen.

Das Dämpferrohr 12b des Stoßdämpfers 12 indes ist über einen zentrischen Anschlusszapfen 28 mit dem Dämpferlager 18 verbunden, dessen äußeres Lagergehäuse 18a mit dem nicht dargestelltem Aufbau des Kraftfahrzeuges verschraubt ist.

Der über einen gummielastischen, ringförmigen Dämpferkörper 18c mit dem Lagergehäuse 18a verbundene Lagerkern 18b des Dämpferlagers 18 bildet mit einem oberen Federteller 30 und einem topfförmigen Gehäuseteil 32 eine Baueinheit, die konzentrisch an dem Anschlusszapfen 28 angeordnet ist.

Die Speicherfeder 16 stützt sich einerseits an dem oberen Federteller 30 und andererseits an einem Verstellfederteller 34 ab. Ferner stützt sich die in ihrer Vorspannkraft entgegengerichtete Tragfeder 14 an dem unteren Federteller 26 und ebenfalls an dem Verstellfederteller 34 ab.

Der Verstellfederteller 34 ist einstückig mit einer Gewindemutter 36 ausgeführt, die über Kugeln 38 in Axialrichtung formschlüssig mit einer Gewindespindel 40 des Stelltriebes 22 bzw. eines Kugelgewindetriebes in Eingriff ist.

Die Gewindespindel 40 wiederum ist über Wälzlager 42, 44 auf dem Anschlusszapfen 28 und dem Dämpferrohr 12b drehbar, jedoch axial unverschiebbar gelagert.

Ferner trägt die Gewindespindel 40 den Rotor 46 des Elektromotors 24, dessen Stator 48 unter Belassung eines geringfügigen Ringspaltes den Rotor 46 umschließt.

Um die Speicherfeder 16 und die Tragfeder 14 ist jeweils ein gummielastischer Faltenbalg 50, 52 angeordnet. Der obere Faltenbalg 50 ist an dem Federteller 30 und an dem Verstellfederteller 34 befestigt und schließt somit einen oberen Raum 54 ab. Des Weiteren ist der untere Faltenbalg 52 an dem unteren Federteller 26 und ebenfalls an dem Verstellfederteller 34 befestigt und bildet somit den darunter liegenden, abgeschlossenen Raum 56.

Die Faltenbälge 50, 52 sind derart durch Gewebeverstärkungen (nicht dargestellt) ausgesteift, dass sie ohne sich aufzublähen oder zusammenzuziehen bei auftretenden Federbewegungen als Luftpumpe wirken können. Die Faltenbälge 50, 52 sind z. B. mittels nicht dargestellter Schlauchbinder an den besagten Federtellern 26, 30, 34 befestigt.

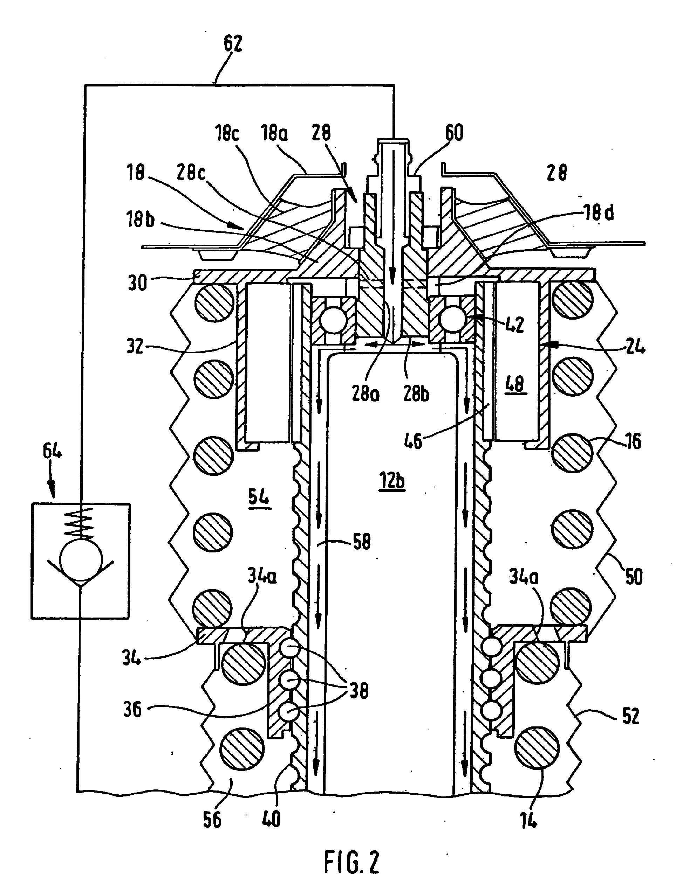

In dem Anschlusszapfen 28 (vgl. **Fig. 2**) ist als ein Zuführkanal eine zentrische Bohrung 28a vorgesehen, die über einen eingearbeiteten Querkanal 28b in einen Ringspalt 58 mündet, der zwischen dem Dämpferrohr 12b und der Gewindespindel 40 gebildet ist.

An die zentrische Bohrung 28a ist geodätisch oben liegend mittels eines Anschlussnippels 60 eine Ansaugleitung 62 angeschlossen, die über ein Rückschlagventil 64 in einen Reinluftraum 66 (vgl. **Fig. 1**) eines im Kraftfahrzeug vor dessen Frontscheibe angeordneten Wasserkastens 68 und unterhalb eines vorgeschalteten Luftfilters 70 mündet. Der Wasserkasten 68 dient zur Luftversorgung einer Heizungseinrichtung oder Klimaanlage des Kraftfahrzeuges.

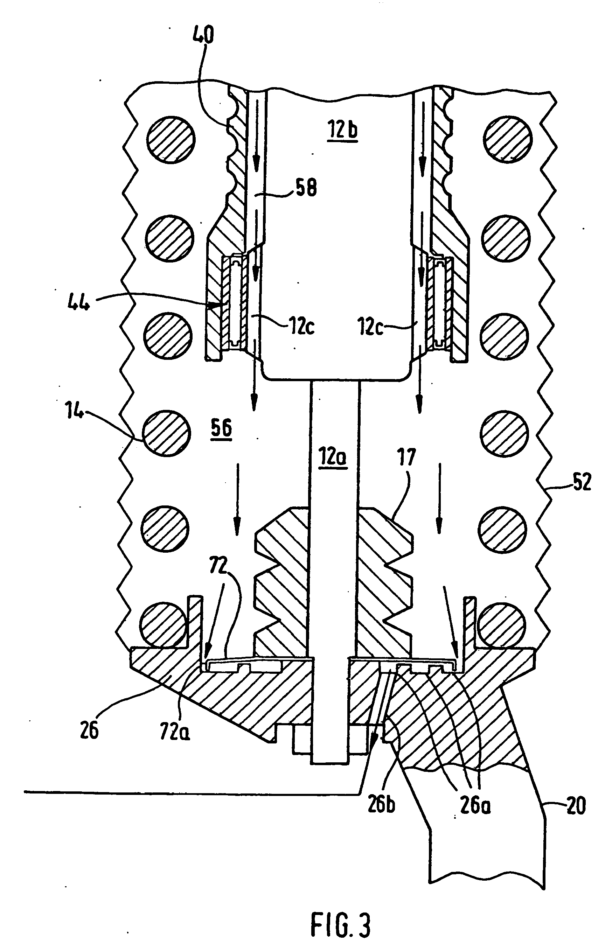

Der Ringspalt 58 (**Fig. 3**) ist über in das Dämpferrohr 12b eingeprägte, umfangsverteilte Axialnuten 12c im Bereich des Wälzlagers 44 mit dem Raum 56 innerhalb der Tragfeder 14 verbunden.

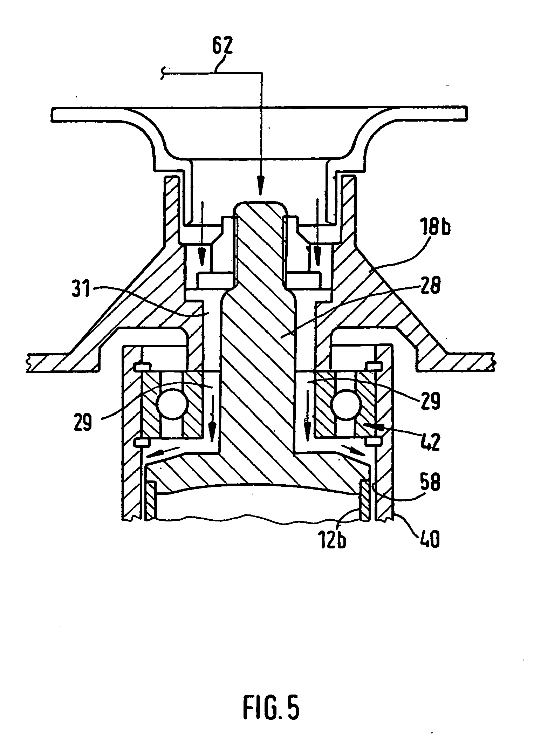

Alternativ zur **Fig. 2** können anstelle der zentrischen Bohrung 28a auch eine oder mehrere Nuten 29 vorgesehen werden, wie es in der Teilansicht der **Fig. 5** gezeigt ist. In der **Fig. 5** ist mit Pfeilen der von der Ansaugleitung 62 kommende Luftstrom angedeutet. Demzufolge strömt die Luft über eine Nut 31 zwischen dem Lagerkern 18b des Dämpferlagers 18 und dem Anschlusszapfen 28 in die im Anschlusszapfen 28 eingeprägten, umfangsverteilten Nuten 29. Diese führen den Luftstrom in Radialrichtung quer nach außen dem Ringspalt 58 zu, der zwischen dem Dämpferrohr 12b und der Gewindespindel 40 gebildet ist.

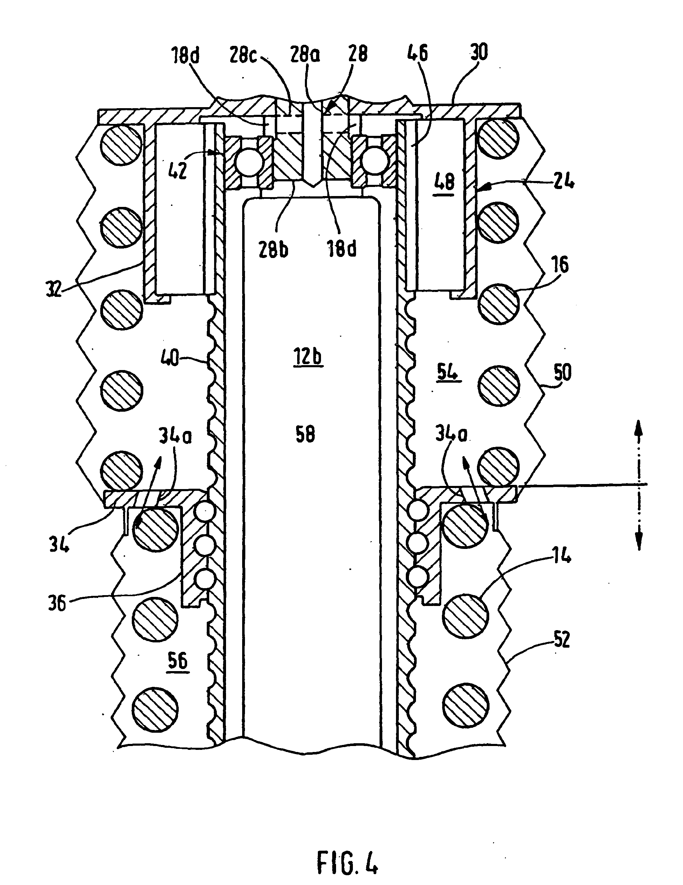

Wie insbesondere aus der **Fig. 4** ersichtlich ist, sind zudem in den Verstellfederteller 34 mehrere, umfangsverteilte Ausnehmungen 34a eingearbeitet, die die Räume 54, 56 miteinander verbinden.

Der Reinluftraum 66 ist dementsprechend strömungstechnisch über die Ansaugleitung 62, das Rückschlagventil 64, die Bohrung 28a, den Querkanal 28b, den Ringspalt 58 und die Axialnuten 12c mit dem Raum 56 verbunden. Ferner sind die beiden Räume 54, 56 über die Ausnehmungen 34a wie ausgeführt zusammengeschaltet.

An der dem Raum 56 zugewandten Stirnfläche des Federtellers 26 ist eine schneckenförmig verlaufende Nut 26a als labyrinthartige Strömungsverbindung zwischen dem Raum 56 und einer geodätisch tief liegenden Abführöffnung bzw. Drosselbohrung 26b vorgesehen, die mittels einer ringförmigen Abdeckscheibe 72 nach oben geschlossen ist. An dem Abdeckblech 72 ist zumindest eine Einströmöffnung 72a vorgesehen, die demzufolge über die spiralförmige Nut 26a als Strömungsverbindung mit der Drosselbohrung 26b am anderen Ende der Nut 26a verbunden ist.

Über die Drosselbohrung 26b und/oder ein weiteres Rückschlagventil 74 (**Fig. 1**) kann somit bei leichtem Überdruck in dem Raum 56 Kühlluft abgeführt werden. Das Rückschlagventil 74 kann in einer nach außen verlegten Abführleitung 76 oder gegebenenfalls unmittelbar in der Drosselbohrung 26b oder in dem Federteller 26 angeordnet sein.

Bei Federbewegungen der Radaufhängung des Kraftfahrzeuges und/oder bei einer axialen Verlagerung des Verstellfedertellers 34 über den Stelltrieb 22 werden die beiden Faltenbälge 50, 52 zwischen den Federtellern 30, 26 in axialer Richtung auseinandergezogen oder zusammengeschoben, wobei in den dicht abgeschlossenen Räumen 54, 56 Unterdruck oder Überdruck entsteht.

Diese Druckunterschiede führen aufgrund der vorbeschriebenen Merkmale des Federbeines 10 dazu, dass durch die als Luftpumpe wirkenden Faltenbälge 50, 52 über die Ansaugleitung 62 und das Rückschlagventil 64 Kühlluft aus dem Reinluftraum 66 angesaugt wird. Die Kühlluft strömt gemäß den eingezeichneten Pfeilen (**Fig. 2** **und** **3**) durch den Ringspalt 58 in den Raum 56 und weiter durch die Ausnehmungen 34a im Verstellfederteller 34 in den Raum 54. Vom Raum 56 wird bei vorherrschendem Überdruck die Kühlluft über die labyrinthartige Strömungsverbindung bzw. die spiralförmige Nut 26a, die Drosselbohrung 26b und gegebenenfalls das Rückschlagventil 74 nach außen in die Atmosphäre abgeführt.

Durch diese Kühlluftströmung entlang des Dämpferrohrs 12b des Stoßdämpfers 12 und entlang der Gewindespindel 40 mit dem Rotor 46 des Elektromotors 24 werden diese Bauteile wirksam gekühlt. Ferner können durch die geodätisch tiefer liegende Abführöffnung bzw. Drosselbohrung 26b gegebenenfalls vorhandene Feuchtigkeit und/oder Schmutzpartikel abgeführt werden.

Gemäß den eingezeichneten Pfeilen in **Fig. 4** wird zudem bei definierten Verstellbewegungen des Verstellfedertellers 34 durch die Ausnehmungen 34a Kühlluft hin- und hergeschoben, die zusätzlich eine Abkühlung des über den Ausnehmungen 34a im Verstellfederteller 34 liegenden Elektromotors 24 bzw. dessen Stator 48 und der Gewindespindel 40 bewirkt.

Zusätzlich kann in dem Anschlusszapfen 28 ein weiterer, die zentrale Bohrung 28a schneidender Querkanal 28c vorgesehen sein, der über korrespondierende, radial verlaufende Ausnehmungen 18d im Lagerkern 18b des Dämpferlagers 18 eine Strömungsverbindung zu dem zwischen dem Rotor 46 und dem Stator 48 des Elektromotors 24 vorhandenen Ringspalt (ohne Bezugszeichen) herstellt.

Damit kann zusätzliche Kühlluft aus der zentrischen Bohrung 28a über den Querkanal 28c und die Ausnehmungen 18d in den besagten Ringspalt des Elektromotors 24 und von dort in den darunter liegenden Raum 54 gesaugt werden, so dass der räumlich über den Ausnehmungen 34a im Verstellfederteller 34 positionierte Elektromotor 24 direkt gekühlt ist.

Die Erfindung ist nicht auf das dargestellte Ausführungsbeispiel beschränkt. Anstelle zweier Faltenbälge 50, 52 kann auch ein einzelner Faltenbalg vorgesehen sein, der entweder nur die oben liegende Speicherfeder 16 umschließt oder der konstruktiv so ausgeführt ist, dass beide Federn 14, 16 umschlossen sind.

Die untere Abströmöffnung kann nur als Drosselbohrung 26b oder als Rückschlagventil 74 ausgeführt sein. Anstelle der dargestellten Kugel-Rückschlagventile 64, 74 können auch andere, querschnittsvermindernde Ventile, z. B. Flatterventile, verwendet sein.

## Patentansprüche

1. Federbein für Radaufhängungen von Kraftfahrzeugen, mit einem Teleskop-Stoßdämpfer (12), der einerseits am Aufbau des Kraftfahrzeuges und andererseits an einem Radführungselement abgestützt ist, mit einer um den Stoßdämpfer (12) angeordneten Tragfeder (14) und einer in Reihe geschalteten Speicherfeder (16), die als Schraubendruckfedern ausgebildet sind und jeweils an einem Verstellfederteller (34) in gegensinniger Kraftrichtung angreifen, und mit einem innerhalb der Tragfeder (14) oder der Speicherfeder (16) angeordneten, elektromotorisch betätigten Stelltrieb, mittels dem der Verstellfederteller (34) axial verschiebbar ist, sowie mit zumindest einem ringförmigen, die Speicherfeder (16) und die Tragfeder (14) umschließenden Faltenbalg (50, 52), **dadurch gekennzeichnet, dass** der von dem Faltenbalg (50, 52) umschlossene Raum (54, 56) mit vorzugsweise querschnittsgesteuerten Zuführöffnungen (28a) und Abführöffnungen (26b) für Kühlluft verbunden ist, derart, dass der zumindest eine entsprechend ausgesteift ausgebildete Faltenbalg (50, 52) bei Federbewegungen als Luftpumpe wirkt, wobei der den Verstellfederteller (34) verstellende Stelltrieb (22) eine um das Dämpferrohr (12b) des Stoßdämpfers (12) angeordnete, drehbar gelagerte Gewindespindel (40) aufweist, auf der die den Verstellfederteller (34) tragende Gewindemutter (36) geführt ist, und dass zwischen der Gewindespindel (40) und dem Dämpferrohr (12b) ein Ringspalt (58) gebildet ist, der mit der Zuführöffnung (28a) und der Abführöffnung (26b) strömungstechnisch verbunden ist und als Kühlkanal wirkt.

2. Federbein nach Anspruch 1, **dadurch gekennzeichnet, dass** zwei Faltenbälge (50, 52) vorgesehen sind, die jeweils einerseits an dem Verstellfederteller (34) mittelbar oder unmittelbar befestigt sind, dass in dem Verstellfederteller (34) zumindest eine die beiden umschlossenen Räume (54, 56) verbindende Ausnehmung (34a) vorgesehen ist, und/oder dass zumindest ein Raum (54, 56) mit zumindest einer Zuführöffnung (28a) und einer Abführöffnung (26b) für Kühlluft versehen ist.

3. Federbein nach Anspruch 2, **dadurch gekennzeichnet, dass** beide von den Faltenbälgen (50, 52) umschlossene Räume (54, 56) mit zumindest einer Zuführöffnung (28a) und zumindest einer Abführöffnung (26b) für Kühlluft verbunden sind.

4. Federbein nach einem der Ansprüche 1 bis 3, **dadurch gekennzeichnet, dass** die zumindest eine Zuführöffnung (28a) geodätisch oben liegend und die zumindest eine Abführöffnung (26b) für Kühlluft geodätisch unten liegend angeordnet ist.

5. Federbein nach einem der Ansprüche 1 bis 4, **dadurch gekennzeichnet, dass** das Dämpferrohr (12b) des Stoßdämpfers (12) über den Anschlusszapfen (28) mit dem aufbauseitigen Dämpferlager (18) verbunden ist und dass die zentrale Bohrung (28a) mit dem anschließenden Querkanal (28b) unmittelbar in den Ringspalt (58) bzw. den ringförmigen Kühlkanal mündet.

6. Federbein nach einem der Ansprüche 1 bis 5, **dadurch gekennzeichnet, dass** im Bereich der unteren Wälzlagerung (44) der Gewindespindel (40) auf dem Dämpferrohr (12b) des Stoßdämpfers (12) Durchbrüche in Form von Axialnuten (12c) vorgesehen sind, die den Kühlkanal (58) mit dem durch den Faltenbalg (52) umschlossenen Raum (56) im Bereich der Kolbenstange (12a) des Stoßdämpfers (12) verbinden.

7. Federbein nach einem der vorhergehenden Ansprüche, **dadurch gekennzeichnet, dass** eine Zuführöffnung durch zumindest einen Zuführkanal (28a) und einen diese schneidenden Querkanal (28b) im Anschlusszapfen (28) des Stoßdämpfers (12) am aufbauseitigen Dämpferlager (18) gebildet ist, welcher Zuführkanal als zentrale Bohrung und/oder als zumindest eine umfangsseitige Nut ausgebildet ist.

8. Federbein nach einem der vorhergehenden Ansprüche, **dadurch gekennzeichnet, dass** an die Zuführöffnung (28a) eine Ansaugleitung (62) mit einem Rückschlagventil (64) angeschlossen ist, und dass vorzugsweise die Ansaugleitung (62) in einen Reinluftraum (66) von Einrichtungen des Kraftfahrzeuges mündet.

9. Federbein nach Anspruch 8, **dadurch gekennzeichnet, dass** die Ansaugleitung (62) in einen Wasserkasten (68) unterhalb eines Luftfilters (70) einer den Fahrzeuginnenraum des Kraftfahrzeuges mit konditionierter Raumluft versorgenden Einrichtung ist.

10. Federbein nach einem der vorhergehenden Ansprüche, **dadurch gekennzeichnet, dass** stromab der Abführöffnung für Kühlluft ein Rückschlagventil (74) vorgesehen ist, das vorzugsweise mittelbar oder unmittelbar im die Tragfeder (14) abstützenden, unteren Federteller (26) vorgesehen ist.

11. Federbein nach einem der vorhergehenden Ansprüche, **dadurch gekennzeichnet, dass** die Abführöffnung für Kühlluft durch zumindest eine Drosselbohrung (26b) hergestellt ist, die vorzugsweise mittelbar oder unmittelbar im die Tragfeder (14) abstützenden, unteren Federteller (26) angeordnet ist.

12. Federbein nach Anspruch 11, **dadurch gekennzeichnet, dass** die Abführöffnung für Kühlluft bzw. die zumindest eine Drosselbohrung (26b) über eine labyrinthartige Strömungsverbindung (26a) im Federteller (26) mit dem korrespondierenden Raum (56) innerhalb des Faltenbalges (52) verbunden ist.

13. Federbein nach Anspruch 12, **dadurch gekennzeichnet, dass** die Strömungsverbindung durch eine schneckenförmig verlaufende Nut (26a) im unteren Federteller (26) hergestellt ist, die durch ein darüber liegendes Abdeckblech (72) geschlossen ist und die eine Einströmöffnung (72a) einerseits und eine durch die Drosselbohrung (26b) gebildete Ausströmöffnung andererseits aufweist.

14. Federbein nach einem der vorhergehenden Ansprüche, **dadurch gekennzeichnet, dass** der die Gewindespindel (40) des Stelltriebes (22) antreibende Elektromotor (24) ringförmig innerhalb der Speicherfeder (16) angeordnet ist, wobei dessen ringförmiger Rotor (46) trieblich mit der Gewindespindel (40) verbunden ist, und dass der Elektromotor (24) oberhalb der in dem Verstellfederteller (34) angeordneten Ausnehmungen (34a) positioniert ist.

15. Federbein nach Anspruch 14, **dadurch gekennzeichnet, dass** der zwischen dem Rotor (46) und dem Stator (48) des Elektromotors (24) gebildete Ringspalt strömungstechnisch mit der Zuführöffnung (28a) und dem oberhalb des Verstellfedertellers (34) gebildeten Raum (54) in Verbindung steht.

16. Federbein nach Anspruch 15, **dadurch gekennzeichnet, dass** der Ringspalt zwischen dem Rotor (46) und dem Stator (48) des Elektromotors (24) über einen weiteren, die zentrale Bohrung (28a) in dem Anschlusszapfen (28) des Dämpferrohres (12b) des Stoßdämpfers (12) schneidenden Querkanal (28c) mit der Zuführöffnung für Kühlluft verbunden ist.

## Claims

1. Suspension strut for wheel suspensions of motor vehicles, comprising a telescopic shock absorber (12) which is supported on the body of the motor vehicle and on a wheel control element, comprising a bearing spring (14) arranged around the shock absorber (12) and a pre-loaded spring (16) connected in series which are configured as compression springs and which each act on an adjusting spring plate (34) in opposite force directions, and comprising an electric-motor-driven actuator, which is arranged inside the bearing spring (14) or the pre-loaded spring (16) and by means of which the adjusting spring plate (34) is axially displaceable, and comprising at least one annular gaiter (50, 52) which encompasses the pre-loaded spring (16) and the bearing spring (14), **characterised in that** the space (54, 56) encompassed by the gaiter (50, 52) is connected to preferably cross-sectionally controlled feed openings (28a) and discharge openings (26b) for cooling air in such a way that the at least one gaiter (50, 52), configured so as to be correspondingly stiffened, acts as an air pump in the case of spring movements, the actuator (22) which adjusts the adjusting spring plate (34) comprising a rotatably mounted threaded spindle (40) arranged around the damper tube (12b) of the shock absorber (12), on which threaded spindle the threaded nut (36) bearing the adjusting spring plate (34) is guided, and **in that** an annular gap (58) is formed between the threaded spindle (40) and the damper tube (12b), is fluidically connected to the feed opening (28a) and the discharge opening (26b) and acts as a cooling duct.

2. Suspension strut according to claim 1, **characterised in that** two gaiters (50, 52) are provided which are each directly or indirectly fastened on one side to the adjusting spring plate (34), **in that** at least one recess (34a) connecting the two encompassed spaces (54, 56) is provided in the adjusting spring plate (34), and/or **in that** at least one space (54, 56) is provided with at least one feed opening (28a) and one discharge opening (26b) for cooling air.

3. Suspension strut according to claim 2, **characterised in that** the two spaces (54, 56) encompassed by the gaiters (50, 52) are connected to at least one feed opening (28a) and at least one discharge opening (26b) for cooling air.

4. Suspension strut according to any one of claims 1 to 3, **characterised in that** the at least one feed opening (28a) is arranged geodetically at the top and the at least one discharge opening (26b) for cooling air is arranged geodetically at the bottom.

5. Suspension strut according to any one of claims 1 to 4, **characterised in that** the damper tube (12b) of the shock absorber (12) is connected to the body shock absorber mounting (18) via the connecting pin (28), and **in that** the central hole (28a) having the connecting transverse duct (28b) discharges directly into the annular gap (58) or the annular cooling duct.

6. Suspension strut according to any one of claims 1 to 5, **characterised in that** openings in the form of axial grooves (12c) are provided on the damper tube (12b) of the shock absorber (12) in the region of the lower roller bearings (44) of the threaded spindle (40), which openings connect the cooling duct (58) to the space (56) encompassed by the gaiter (52) in the region of the piston rod (12a) of the shock absorber (12).

7. Suspension strut according to any one of the preceding claims, **characterised in that** a feed opening is formed in the connecting pin (28) of the shock absorber (12) on the body shock absorber mounting (18) by at least one feed duct (28a) and one transverse duct (28b) intersecting said feed duct, which feed duct is configured as a central hole and/or as at least one circumferential groove.

8. Suspension strut according to any one of the preceding claims, **characterised in that** a suction pipe (62) having a non-return valve (64) is attached to the feed opening (28a), and **in that** the suction pipe (62) preferably discharges into a clean air space (66) of devices of the motor vehicle.

9. Suspension strut according to claim 8, **characterised in that** the suction pipe (62) is in a water chamber (68) below an air filter (70) of a device which supplies the vehicle interior of the motor vehicle with conditioned ambient air.

10. Suspension strut according to any one of the preceding claims, **characterised in that** a non-return valve (74) is provided downstream of the discharge opening for cooling air and is preferably provided, directly or indirectly, in the lower spring plate (26) supporting the bearing spring (14).

11. Suspension strut according to any one of the preceding claims, **characterised in that** the discharge opening for cooling air is produced by at least one throttling hole (26b) which is preferably provided, directly or indirectly, in the lower spring plate (26) supporting the bearing spring (14).

12. Suspension strut according to claim 11, **characterised in that** the discharge opening for cooling air or the at least one throttling hole (26b) is connected to the corresponding space (56) inside the gaiter (52) via a labyrinth-type flow connection (26a) in the spring plate (26).

13. Suspension strut according to claim 12, **characterised in that** the flow connection is produced by a helically extending groove (26a) in the lower spring plate (26), which groove is closed by a cover plate (72) positioned thereover and comprises an inflow opening (72a) and an outflow opening formed by the throttling hole (26b).

14. Suspension strut according to any one of the preceding claims, **characterised in that** the threaded spindle (40) of the electric motor (24) driving the actuator (22) is arranged in an annular manner inside the pre-loaded spring (16), the annular rotor (46) thereof being connected to the threaded spindle (40) in a driven manner, and **in that** the electric motor (24) is positioned above the recesses (34a) arranged in the adjusting spring plate (34).

15. Suspension strut according to claim 14, **characterised in that** the annular gap formed between the rotor (46) and the stator (48) of the electric motor (24) is fluidically connected to the feed opening (28a) and the space (54) formed above the adjusting spring plate (34).

16. Suspension strut according to claim 15, **characterised in that** the annular gap between the rotor (46) and the stator (48) of the electric motor (24) is connected to the feed opening for cooling air via a further transverse duct (28c) intersecting the central hole (28a) in the connecting pin (28) of the damper tube (12b) of the shock absorber (12).

## Revendications

1. Jambe de force à ressort pour suspensions de roues de véhicules automobiles, avec un amortisseur de choc télescopique (12), qui s'appuie, d'une part, sur la structure du véhicule automobile et, d'autre part, sur un élément de guidage de roue, avec un ressort porteur (14) aménagé autour de l'amortisseur de choc (12) et un ressort accumulateur (16) monté en série, qui se présentent sous la forme de ressorts cylindriques de compression et s'appliquent respectivement sur une cuvette de ressort ajustable (34) dans une direction de force à contre-sens, et avec une commande de réglage aménagée à l'intérieur du ressort porteur (14) ou du ressort accumulateur (16) et actionnée par un moteur électrique, au moyen de laquelle la cuvette de ressort ajustable (34) peut être déplacée axialement, et avec au moins un soufflet (50, 52) annulaire, entourant le ressort accumulateur (16) et le ressort porteur (14), **caractérisée en ce que** l'espace (54, 56) entouré par le soufflet (50, 52) est raccordé à des ouvertures d'acheminement (28a) et des ouvertures d'échappement (26b) pour de l'air de refroidissement de préférence commandées en section transversale de sorte que le au moins un soufflet (50, 52) renforcé de manière correspondante fasse office de pompe à air en cas de mouvements du ressort, dans laquelle la commande de réglage (22) ajustant la cuvette de ressort ajustable (34) présente une broche filetée (40) montée à rotation et aménagée autour du tube (12b) de l'amortisseur de choc (12), sur laquelle est guidé l'écrou fileté (36) portant la cuvette de ressort ajustable (34), et **en ce qu'**une fente annulaire (58) est formée entre la broche filetée (40) et le tube d'amortisseur (12b), laquelle fente annulaire est raccordée en communication de fluide à l'ouverture d'acheminement (28a) et à l'ouverture d'échappement (26b) et fait office de canal de refroidissement.

2. Jambe de force à ressort selon la revendication 1, **caractérisée en ce qu'**il est prévu deux soufflets (50, 52) qui sont fixés respectivement indirectement ou directement sur la cuvette de ressort ajustable (34), **en ce qu'**il est prévu au moins un évidement (34a) raccordant les deux espaces (54, 56) dans la cuvette de ressort ajustable (34) et/ou **en ce qu'**au moins un espace (54, 56) est pourvu d'au moins une ouverture d'acheminement (28a) et d'une ouverture d'échappement (26b) pour de l'air de refroidissement.

3. Jambe de force à ressort selon la revendication 2, **caractérisée en ce que** les deux espaces (54, 56) entourés par les soufflets (50, 52) sont raccordés à au moins une ouverture d'acheminement (28a) et à au moins une ouverture d'échappement (26b) pour de l'air de refroidissement.

4. Jambe de force à ressort selon l'une quelconque des revendications 1 à 3, **caractérisée en ce que** la au moins une ouverture d'acheminement (28a) est aménagée en haut au plan géodésique et la au moins une ouverture d'échappement (26b) pour de l'air de refroidissement est aménagée en bas au plan géodésique.

5. Jambe de force à ressort selon l'une quelconque des revendications 1 à 4, **caractérisée en ce que** le tube (12b) de l'amortisseur de choc (12) est raccordé via le tourillon de raccordement (28) au palier d'amortisseur (18) côté structure et **en ce que** l'orifice central (28a) avec le canal transversal (28b) qui s'y raccorde débouche directement dans la fente annulaire (58) ou le canal de refroidissement annulaire.

6. Jambe de force à ressort selon l'une quelconque des revendications 1 à 5, **caractérisée en ce que**, dans la zone du palier de roulement inférieur (44) de la broche filetée (40), des passages en forme de rainures axiales (12c) sont prévus sur le tube (12b) de l'amortisseur de choc (12), lesquels passages raccordent le canal de refroidissement (58) à l'espace (56) entouré par le soufflet (52) dans la zone de la tige de piston (12a) de l'amortisseur de choc (12).

7. Jambe de force à ressort selon l'une quelconque des revendications précédentes, **caractérisée en ce qu'**une ouverture d'acheminement est formée par au moins un canal d'acheminement (28a) et un canal transversal (26b) coupant celle-ci dans le tourillon de raccordement (28) de l'amortisseur de choc (12) sur le palier 'amortisseur (18) côté structure, lequel canal d'acheminement se présente sous la forme d'un orifice central et/ou sous la forme d'au moins une rainure périphérique.

8. Jambe de force à ressort selon l'une quelconque des revendications précédentes, **caractérisée en ce qu'**un conduit d'aspiration (62) avec une soupape de non-retour (64) est raccordé à l'ouverture d'acheminement (28a) et **en ce que**, de préférence, le conduit d'aspiration (62) débouche dans un espace d'air pur (66) de dispositifs du véhicule automobile.

9. Jambe de force à ressort selon la revendication 8, **caractérisée en ce que** le conduit d'aspiration (62) est dans une boîte à eau (68) en dessous d'un filtre à air (70) d'un dispositif alimentant l'espace interne du véhicule automobile avec de l'air ambiant conditionné.

10. Jambe de force à ressort selon l'une quelconque des revendications précédentes, **caractérisée en ce qu'**en amont de l'ouverture d'évacuation pour l'air de refroidissement, il est prévu une soupape de non-retour (74) qui est aménagée de préférence indirectement ou directement dans la cuvette de ressort (26) inférieure soutenant le ressort porteur (14).

11. Jambe de force à ressort selon l'une quelconque des revendications précédentes, **caractérisée en ce que** l'ouverture d'évacuation pour l'air de refroidissement est faite d'au moins un orifice d'étranglement (26b) qui est aménagé de préférence indirectement ou directement dans la cuvette de ressort (26) inférieure soutenant le ressort porteur (14).

12. Jambe de force à ressort selon la revendication 11, caractérisée en ce l'ouverture d'évacuation pour l'air de refroidissement ou le au moins un orifice d'étranglement (26b) est raccordé(e) via un raccord d'écoulement labyrinthique (26a) dans la cuvette de ressort (26) à l'espace correspondant (56) dans le soufflet (52).

13. Jambe de force à ressort selon la revendication 12, **caractérisée en ce que** le raccord d'écoulement est produit par une rainure (26a) s'étendant en hélice dans la cuvette de ressort inférieure (26), qui est fermée par une tôle de recouvrement (72) située au-dessus et qui présente, d'une part, une ouverture d'admission (72a) et, d'autre part, une ouverture d'évacuation formée par l'orifice d'étranglement (26b).

14. Jambe de force à ressort selon l'une quelconque des revendications précédentes, **caractérisée en ce que** le moteur électrique (24) entraînant la broche filetée (40) de la commande de réglage (22) est aménagé de manière annulaire à l'intérieur du ressort accumulateur (16), dans laquelle son rotor annulaire (46) est raccordé en liaison motrice à la broche filetée (40) et **en ce que** le moteur électrique (24) est positionné au-dessus des évidements (34a) aménagés dans la cuvette de ressort ajustable (34).

15. Jambe de force à ressort selon la revendication 14, **caractérisée en ce que** la fente annulaire formée entre le rotor (46) et le stator (48) du moteur électrique (24) est en communication technique de l'écoulement avec l'ouverture d'acheminement (28a) et l'espace (54) formé au-dessus de la cuvette de ressort ajustable (34).

16. Jambe de force à ressort selon la revendication 15, **caractérisée en ce que** la fente annulaire entre le rotor (46) et le stator (48) dumoteur électrique (24) est raccordée à l'ouverture d'acheminement en air de refroidissement via un autre canal transversal (28c) coupant l'orifice central (28a) dans le tourillon de raccordement (28) du tube (12b) de l'amortisseur de choc (12).
